# EUROPÄISCHE PATENTSCHRIFT

(11) **EP 1 428 057 B1**
(45) Veröffentlichungstag und Bekanntmachung des Hinweises auf die Patenterteilung: **23.11.2005**
(21) Anmeldenummer: 02799402.9
(22) Anmeldetag: 12.09.2002
(51) Int. Cl.: G02B 6/44

(54) **STECKERMODUL**
CONNECTOR MODULE
MODULE CONNECTEUR

(30) Priorität: 21.09.2001 DE 20115582 U
(43) Veröffentlichungstag der Anmeldung: 16.06.2004
(73) Patentinhaber: CCS Technology, Inc., Wilmington, DE 19803 (US)
(72) Erfinder: IWANEK, Waldemar, 44369 Dortmund (DE)
(74) Vertreter: Sturm, Christoph
(86) Internationale Anmeldenummer: PCT/EP2002/010225
(87) Internationale Veröffentlichungsnummer: WO 2003/028387

(56) Entgegenhaltungen:
- BE-A- 1 007 561
- US-A- 5 212 761
- US-A- 5 412 751
- US-A- 5 975 769
- PATENT ABSTRACTS OF JAPAN vol. 1997, no. 08, 29. August 1997 (1997-08-29) & JP 09 093763 A (SUMITOMO WIRING SYST LTD), 4. April 1997 (1997-04-04)

## Beschreibung

Die Erfindung betrifft ein Steckermodul für einen Lichtwellenleiter-Verteilerschrank gemäß dem Oberbegriff des Patentanspruchs 1.

Beim Aufbau von Lichtwellenleiterkabel-Netzwerken werden Verteilerschränke für die Gewährleistung einer strukturierten Verkabelung benötigt. Steckermodule sind Untereinheiten von Verteilerschränken. Eine Anforderung, die an Lichtwellenleiter Verteilerschränke gestellt wird, ist eine maximale Bestückung derselben bei hoher Packungsdichte.

Der heutige Standard für Lichtwellenleiter-Verteilerschränke sind sogenannte 19 Zoll Verteilerschränke mit einer Bautiefe von 600 Millimetem. Soll die Bautiefe des Verteiterschranks verkleinert werden, zum Beispiel auf eine Bautiefe von 300 Millimetern, so treten Probleme mit der strukturierten Verkabelung, insbesondere mit der Handhabung der notwendigen Überlängen der Lichtwellenleiter bzw. Lichtwellenleiterkabel im Verteilerschrank, auf.

Die US 5,412,751 offenbart ein Steckermodul mit einem plattenförmigen Trägerelement und einem Steckerelement sowie Führungselementen für Lichtwellenleiter. Der von den Führungselementen begrenzte Speicherraum dient lediglich der Aufnahme einzelner Lichtwellenleiter. Weitere Steckermodule mit Führungselementen für Lichtwellenleiter sind aus der US 5,212,761 sowie aus der US 5,975,769 bekannt.

Hiervon ausgehend liegt der vorliegenden Erfindung das Problem zu Grunde, ein neuartiges Steckermodul für einen Lichtwellenleiter-Verteilerschrank zu schaffen, welches auch bei verringerter Bautiefe des Verteilerschranks eine strukturierte Verkabelung ermöglicht.

Dieses Problem wird durch ein Steckermodul für einen Lichtwellenleiter-Verteilerschrank mit den Merkmalen des Anspruchs 1 gelöst.

Bevorzugte Weiterbildungen der Erfindung ergeben sich aus der nachfolgenden Beschreibung. Ein Ausführungsbeispiel wird anhand der Zeichnung näher erläutert. In der Zeichnung zeigt:

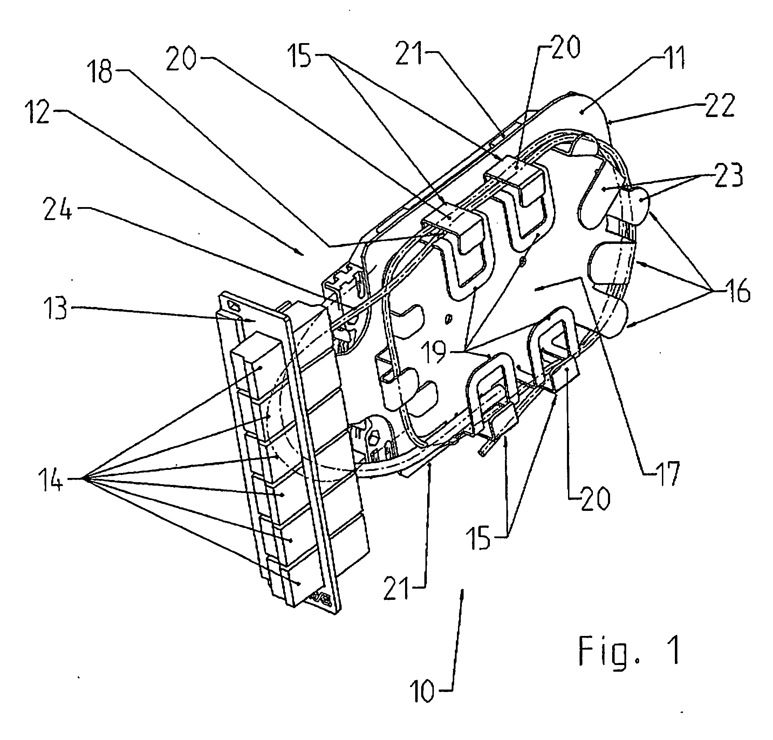

- Fig.1:: ein erfindungsgemäßes Steckermodul für einen Lichtwellenleiter-Verteilerschrank in perspektivischer Seitenansicht.

Fig. 1 zeigt ein erfindungsgemäßes Steckermodul 10 für einen Lichtwellenleiter-Verteilerschrank. Das Steckermodul 10 verfügt über ein plattenförmiges Trägerelement 11. Einer ersten Seite 12 des Trägerelements 11 ist Steckerelement 13 zugeordnet. Das Steckerelement 13 umfasst mehrere Einzelstecker 14.

Dem plattenförmigen Trägerelement 11 sind Führungselemente 15, 16 für Lichtwellenleiter zugeordnet. Die Führungselemente 15, 16 sind in Form eines Ovals auf dem Trägerelement 11 positioniert. Erfindungsgemäß unterteilen die Führungselemente 15, 16 den von dem Trägerelement 11 bereitgestellten Speicherraum für Lichtwellenleiter-Überlängen in einen inneren Speicherraum 17 und einen äußeren Speicherraum 18.

Vier Führungselemente 15 der insgesamt zwölf Führungselemente 15, 16 sind klippartig und zweiteilig ausgebildet. Jedes der klippartig ausgebildeten Führungselemente 15 verfügt über ein Basiselement 19 und ein gegenüber dem Basiselement 19 klippartig hin- und herbewegbares Halteelement 20. Basiselement 19 und Haltelement 20 bilden zusammen die zweiteilig ausgebildeten Führungselemente 15. Die Halteelemente 20 sind gegenüber dem jeweiligen Basiselement 19 näher zu Außenseiten 21, 22 des plattenförmigen Trägerelements 11 positioniert. Gemäß Fig. 1 sind des weiteren die Basiselemente 19 der Führungselemente 15 L-förmig und die Halteelemente 20 der Führungselemente 15 U-förmig ausgebildet.

Die übrigen Führungselemente 16 sind lediglich einteilig ausgebildet. Sie verfügen lediglich über L-förmig ausgebildete Basiselemente 23.

Zwischen den Halteelementen 20 und den Basiselementen 19 der Führungselemente 15 wird der äußere Speicherraum 18 zur der Aufnahme von Lichtwellenleiter-Überlängen geschaffen. Auf der anderen Seite der Basiselemente 19 schließt sich der innere Speicherraum 17 an.

Der innere Speicherraum 17 dient vorzugsweise der Aufnahme von Überlängen einzelner Lichtwellenleiter, wohingegen der äußere Speicherraum 18 der Aufnahme von Überlängen von zu Bündeln 24 zusammengefasster Lichtwellenleiter dient. Aus Gründen einer einfacheren Darstellung zeigt Fig. 1 lediglich Bündel 24 von Lichtwellenleitern, einzelne Lichtwellenleiter sind in Fig. 1 hingegen nicht dargestellt.

Mit Hilfe des erfindungsgemäßen Steckermoduls 10 lassen sich Überlängen von Lichtwellenleitern noch effektiver in einem Lichtwellenleiter-Verteilerschrank handhaben. So wird erstmals ein Steckermodul vorgeschlagen, welches die Handhabung von Überlängen einzelner Lichtwellenleiter von der Handhabung von Übenängen von Lichtwellenleiter-Bündeln räumlich trennt.

### Bezugszeichenliste

- 10: Steckermodul
- 11: Trägerelement
- 12: Seite
- 13: Steckerelement
- 14: Einzelstecker
- 15: Führungselement
- 16: Führungselement
- 17: Speicherraum
- 18: Speicherraum
- 19: Basiselement
- 20: Halteelement
- 21: Außenseite
- 22: Außenseite
- 23: Basiselement
- 24: Bündel

## Patentansprüche

1. Steckermodul für einen Lichtwellenleiter-Verteilerschrank mit einem plattenförmigen Trägerelement (11), mindestens einem dem plattenförmigen Trägerelement (11) zugeordneten Steckerelement (13) und mindestens einem Führungselement (15, 16) für Lichtwellenleiter, wobei das oder jedes Führungselement (15, 16) den von dem Trägerelement (11) bereitgestellten Speicherraum für Überlängen der Lichtwellenleiter in einen inneren Speicherraum (17) und einen äußeren Speicherraum (18) unterteilt, **dadurch gekennzeichnet, dass**
a) mindestens eines der Führungselemente (15) zweiteilig ausgebildet ist, mit einem Basiselement (19) und einem gegenüber dem Basiselement (19) klippartig hin- und herbewegbaren Halteelement (20), wobei das klippartige hin- und herbewegbare Halteelement (20) gegenüber dem Basiselement (19) näher zu Außenseiten (21, 22) des plattenförmigen Trägerelements (11) positioniert ist, wobei zwischen dem Halteelement (20) und dem Basiselement (19) der äußere Speicherraum (18) zur Aufnahme von Überlängen der zu Bündeln (24) zusammengefassten Lichtwellenleitern gebildet ist, und wobei sich auf der anderen Seite des Basiselements (19) der innere Speicherraum zur Aufnahme von Überlängen einzelner Lichtwellenleiter anschließt,
b) die anderen Führungselemente (16) einteilig ausgebildet sind.

## Claims

1. Connector module for an optical waveguide distribution cabinet having a plate-shaped carrier element (11), at least one connector element (13) associated with the plate-shaped carrier element (11) and at least one guide element (15, 16) for optical waveguides, the or each guide element (15, 16) splitting the storage area which is provided by the carrier element (11) for surplus lengths of optical waveguides into an inner storage area (17) and an outer storage area (18), **characterized in that**
a) at least one of the guide elements (15) is of two-part design, having a base element (19) and a clip-like holding element (20) which can be moved to and fro and is in relation to the base element (19), the clip-like holding element (20) which can be moved to and fro being positioned closer to outer sides (21, 22) of the plate-shaped carrier element (11) than the base element (19), the outer storage area (18) for accommodating surplus lengths of optical waveguides which are combined to form bundles (24) being formed between the holding element (20) and the base element (19), and the inner storage area for accommodating surplus lengths of individual optical waveguides being connected on the other side of the base element (19),
b) the other guide elements (16) are of one-part design.

## Revendications

1. Module connecteur pour une armoire de distribution de guide d'onde optique, comprenant un élément porteur (11) en forme de plaque, au moins un élément de connecteur (13) associé à l'élément porteur (11) en forme de plaque et au moins un élément de guidage (15, 16) pour guide d'onde optique, le ou chaque élément de guidage (15, 16) divisant l'espace de stockage prévu par l'élément porteur (11) pour des surlongueurs du guide d'onde optique en un espace de stockage interne (17) et un espace de stockage externe (18),
**caractérisé en ce que**
a) au moins l'un des éléments de guidage (15) est réalisé en deux parties, avec un élément de base (19) et un élément de retenue (20) pouvant être déplacé d'avant en arrière à la manière d'une agrafe par rapport à l'élément de base (19), l'élément de retenue (20) pouvant être déplacé d'avant en arrière à la manière d'une agrafe étant positionné par rapport à l'élément de base (19) plus près des côtés extérieurs (21, 22) de l'élément porteur (11) en forme de plaque, entre l'élément de retenue (20) et l'élément de base (19) étant formé l'espace de stockage extérieur (18) pour recevoir des surlongueurs des guides d'onde optiques rassemblés en faisceaux (24), et l'espace de stockage interne pour recevoir des surlongueurs de guides d'onde optiques individuels se raccordant de l'autre côté de l'élément de base (19),
b) les autres éléments de guidage (16) sont réalisés d'une seule pièce.
